**Europäisches Patentamt**

**European Patent Office**

**Office européen des brevets**

(19)

(11) Veröffentlichungsnummer : **0 356 387 B1**

(12) # EUROPÄISCHE PATENTSCHRIFT

(45) Veröffentlichungstag der Patentschrift :
**18.12.91 Patentblatt 91/51**

(51) Int. Cl.⁵ : **B23Q 9/00, B28D 1/04**

(21) Anmeldenummer : **89810598.6**

(22) Anmeldetag : **09.08.89**

(54) Vorrichtung zum justierbaren Befestigen von Schienen auf einer Unterlage.

(30) Priorität : **18.08.88 CH 3083/88**

(43) Veröffentlichungstag der Anmeldung :
**28.02.90 Patentblatt 90/09**

(45) Bekanntmachung des Hinweises auf die
Patenterteilung :
**18.12.91 Patentblatt 91/51**

(84) Benannte Vertragsstaaten :
**AT DE FR GB IT SE**

(56) Entgegenhaltungen :
**CH-A- 473 285**
**DE-A- 3 347 251**
**FR-A- 1 156 565**
**FR-A- 2 600 375**

(56) Entgegenhaltungen :
**GB-A- 752 867**
**US-A- 1 713 793**
**US-A- 1 724 470**
**US-A- 2 506 076**
**US-A- 2 736 311**
**US-A- 4 014 236**
**US-A- 4 576 076**

(73) Patentinhaber : **Fritz Haug AG**
**Industriestrasse 6**
**9015 St. Gallen (CH)**

(72) Erfinder : **Wanner, Hans**
**Sonnenböhlstrasse 17**
**CH-9100 Herisau (CH)**

(74) Vertreter : **Wenger, René et al**
**Hepp, Wenger & Partner AG Marktgasse 18**
**CH-9500 Wil (CH)**

EP 0 356 387 B1

## Beschreibung

Die Erfindung betrifft eine Vorrichtung zum justierbaren Befestigen von Schienen auf einer Unterlage, insbesondere für die Führungsschienen einer Bearbeitungsmaschine.

Für das Sägen von Beton muss beispielsweise eine Schiene mit einer integrierten Zahnstange auf der zu sägenden Betonplatte befestigt werden. Die hydraulische Betonsäge wird auf dieser Schiene automatisch vorgeschoben und durchtrennt mit ihrem Sägeblatt den Beton in der gewünschten Schnittiefe. Die Schiene besteht dabei aus zusammensetzbaren Elementen, so dass eine beliebige Schienenlänge aufgebaut werden kann. Speziell vorteilhaft sind dabei breite Schienen, die ein spiel- und verwindungsarmes Abstützen der Schnittkräfte ermöglichen.

Ein Problem bei bekannten Schienenanordnungen besteht insbesondere bei der Befestigung auf der Unterlage, da diese in der Regel nicht absolut plan ausgebildet ist. Beim direkten Festschrauben der Schienen auf die Unterlage können daher Deformationen an der Schiene auftreten. Ein genaues Ausjustieren von Unebenheiten durch Unterlegen von Keilen oder dergleichen erfordert einen unverhältnismässig hohen Arbeitsaufwand.

Es ist daher eine Aufgabe der Erfindung, eine Vorrichtung der eingangs genannten Art zu schaffen, mit deren Hilfe Schienen ohne grossen Arbeitsaufwand auch auf unebenen Unterlagen sicher befestigt werden können. Ausserdem soll die Vorrichtung auch eine einfache Befestigung der Schiene in einer beliebigen Schräglage zur Unterlage ermöglichen. Diese Aufgabe wird erfindungsgemäss durch eine Vorrichtung gelöst, welche die Merkmale im Anspruch 1 aufweist.

Die spezielle Ausbildung von Fussteil und Justierteil erlaubt ersichtlicherweise, dass das Justierteil je nach Anordnung der Befestigungselemente entweder in der Höhe planparallel zur Unterlage justiert werden kann, oder aus einer planparallelen Lage in einem bestimmten Winkel zur Unterlage verschwenkt werden kann. In der gewünschten Relativlage des Justierteils werden die Befestigungselemente angezogen, so dass das Justierteil kraftschlüssig gegen das Fussteil gepresst wird. Eine besonders rationelle Arbeitsweise wird dabei erzielt, wenn die Aufnahmeöffnungen durch an den Platten befestigte Schraubenmuttern gebildet werden. Die Vorrichtung kann dadurch mit Hilfe von zwei Schrauben fixiert werden, welche durch die entsprechenden Schlitze geführt werden. Weitere Teile oder Hilfsmittel sind nicht erforderlich. Selbstverständlich könnten anstelle der Schraubenmuttern auch direkt in die Platten Gewindelöcher geschnitten werden. Es wäre auch denkbar, die Aufnahmeöffnungen als einfache Durchgangsbohrungen auszubilden, wobei zum Feststellen der Vorrichtung lose Schraubenmuttern verwendet werden müssten.

Das Fussteil ist vorteilhaft winkelförmig ausgebildet und weist eine Fussplatte mit einer Oeffnung auf. Die Fussplatte reduziert die spezifische Flächenpressung, so dass auch bei einer schlechten Unterlage kein Eindrücken oder Einsinken befürchtet werden muss. Die Oeffnung dient zum Anschrauben der Fussplatte auf die Unterlage und kann derart gross, eckig, rund oder schlitzförmig ausgebildet sein, dass ein seitliches Verschieben zum Ausgleich von Bohr- und Messfehlern möglich ist.

Eine zusätzliche Justiermöglichkeit kann dadurch erzielt werden, dass das Fussteil als feststellbares Scharnier ausgebildet ist, so dass der Winkel zwischen Platte und Unterlage verstellbar ist. Diese feststellbare Gelenkverbindung würde es ermöglichen, die Schienen auch auf schwierigen Unterlagen wie z.B. Treppenstufen zu befestigen.

Eine sichere Befestigung der Schienen wird erreicht, wenn das Justierteil winkelförmig ausgebildet ist und eine Stützplatte mit wenigstens einem in die Schiene eingreifenden Führungselement aufweist.

Weitere Vorteile und Einzelmerkmale der Erfindung ergeben sich aus der nachfolgenden Beschreibung eines Ausführungsbeispiels und aus den Zeichnungen. Es zeigen :

Figur 1   eine Seitenansicht eines Fussteils,
Figur 2   eine Ansicht des Fussteils gemäss Figur 1,
Figur 3   eine Seitenansicht eines Justierteils,
Figur 4   eine Ansicht des Justierteils gemäss Figur 3,
Figur 5   eine Seitenansicht einer montierten Vorrichtung,
Figur 6   eine Ansicht der Vorrichtung gemäss Figur 5 mit zur Unterlage planparalleler Schiene,
Figur 7   eine Ansicht der Vorrichtung gemäss Figur 5 mit zur Unterlage schräggestellter Schiene, und
Figur 8   ein Beispiel einer Schienenbefestigung auf einer Treppe.

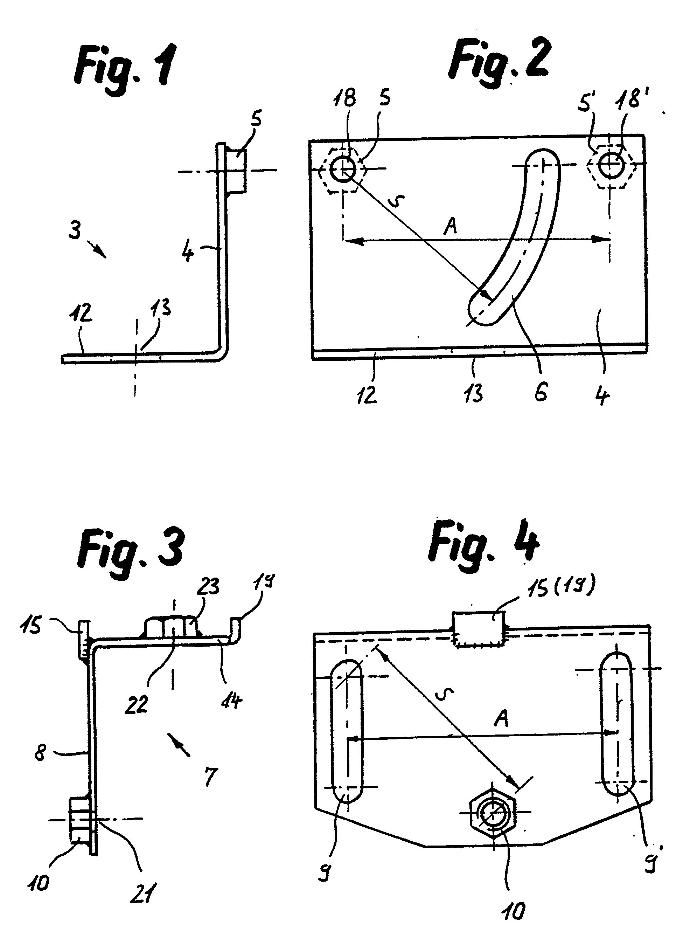

Die Figuren 1 und 2 zeigen ein Fussteil 3, das etwa winkelförmig ausgebildet ist und aus einer Fussplatte 12 und einer zu dieser etwa rechtwinklig angeordneten Platte 4 besteht. In der Fussplatte 12 ist eine beispielsweise runde oder schlitzförmige Oeffnung 13 angeordnet. In den oberen Ecken der Platte 4 sind Bohrungen 18 und hinter diesen Schraubenmuttern 5 angeordnet, welche direkt an die Platte 4 angeschweisst sind. Die Muttern 5 dienen als Aufnahmeöffnungen für Schrauben, wie nachstehend noch erläutert wird. Die Muttern 5, 5' sind in einem Abstand A zueinander angeordnet. Auf der Verbindungsachse zwischen den beiden Bohrungen 18, 18' beginnt ein kreisbogenförmiger Schlitz 6, der sich mit einem Schwenkradius S um das Zentrum der Bohrung 18 in einem Winkel von 45° nach unten erstreckt.

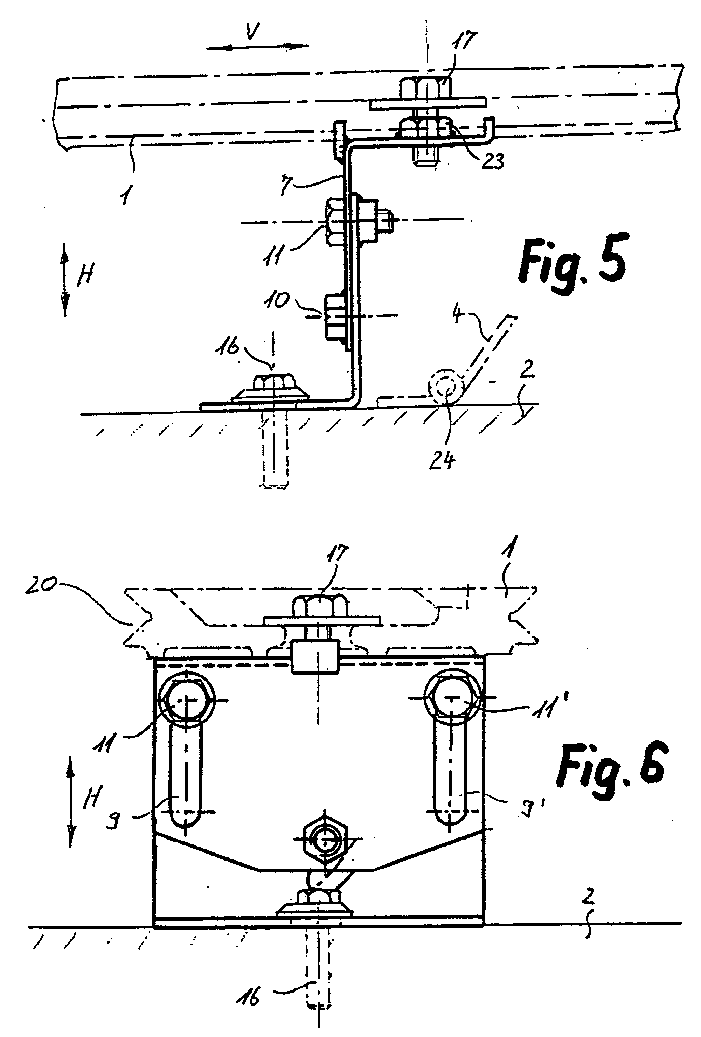

Das in den Figuren 3 und 4 dargestellte Justierteil 7 ist ebenfalls etwa winkelförmig ausgebildet und besteht aus einer Platte 8 und einer rechtwinklig dazu angeordneten Stützplatte 14. Die Stützplatte 14 weist an ihrer Aussenkante eine Abwinklung 19 auf, die als seitliche Führung in einer Vertiefung der Schiene dienen kann. Zusätzlich ist eine Führung 15 an die Platte 8 angeschweisst. Die Platte 8 ist mit parallelen Schlitzen 9, 9' versehen, deren mittlerer Abstand A gleich gross ist wie der Abstand A zwischen den Bohrungen 18, 18' am Fussteil 3. Zwischen den beiden Schlitzen 9 und 9' ist im unteren Bereich der Platte 8 eine Mutter 10 angeschweisst. Diese liegt ebenfalls über einer Bohrung 21, deren Zentrum etwa im Abstand S zum oberen Zentrum des Schlitzes 9 angeordnet ist. Der Abstand S entspricht dabei dem Radius S des Schlitzes 6 am Fussteil 3. Unter einer Bohrung 22 an der Stützplatte 14 ist ebenfalls eine Mutter 23 angeschweisst.

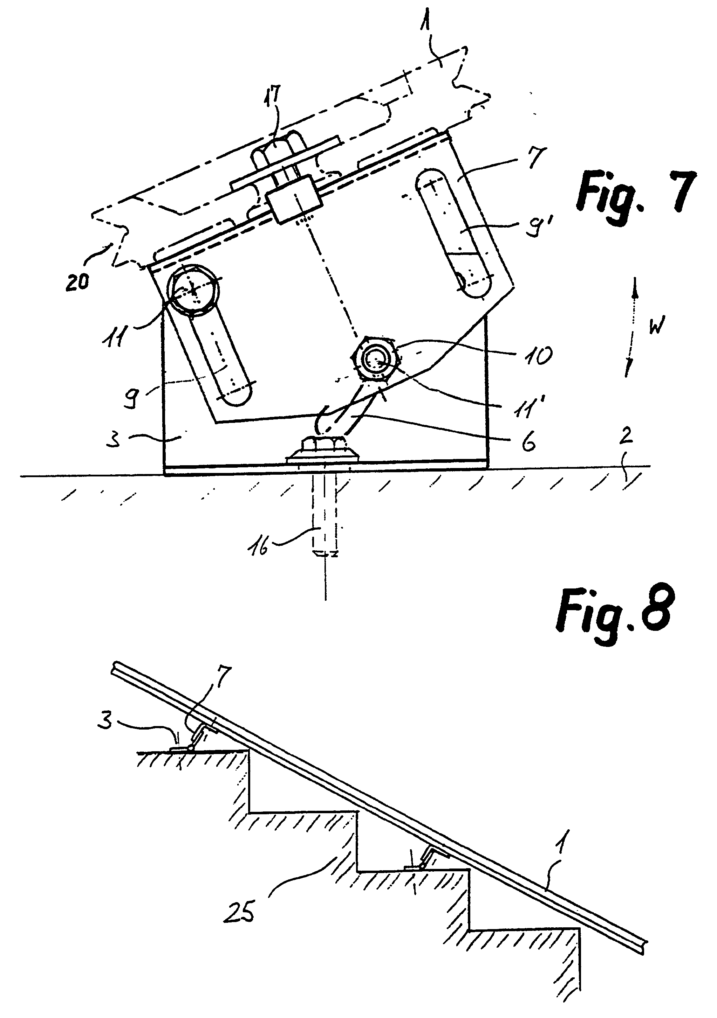

Das Zusammenwirken von Fussteil und Justierteil ist in den Figuren 5 bis 7 dargestellt. Die Figuren 5 und 6 zeigen dabei eine planparallele Anordnung der Schiene 1 zur Unterlage 2. Das Fussteil 3 ist dabei mittels einer Bodenschraube 16 fest an die Unterlage 2 angeschraubt. Durch die beiden parallelen Schlitze 9 und 9' des Justierteils 7 dringen Schrauben 11, 11', welche in die Muttern 5, 5' des Fussteils 3 eingreifen.

Die Schiene 1 ist mit Hilfe einer Schienenschraube 17 fixiert, welche in die Mutter 23 eingreift. Wie aus Figur 6 ersichtlich ist, kann die Schiene 1 seitliche Führungsnuten 20 aufweisen, in denen beispielsweise Gleitschuhe oder Wälzlager des Maschinenschlittens vorgeschoben werden können. Selbstverständlich kann die Schiene aber auch eine beliebige andere Konfiguration aufweisen. Mit V ist in Figur 5 die Vorschubrichtung der Werkzeugmaschine auf der Schiene 1 angedeutet. Die Schiene könnte aber auch in einer anderen Winkellage relativ zu den Platten 4 bzw. 8 befestigt werden.

Für die Höhenverstellung in Pfeilrichtung H der Schiene 1 planparallel zur Unterlage 2 werden die beiden Schrauben 11 und 11' etwas gelöst, so dass das Justierteil 7 in den Schlitzen 9, 9' gehoben bzw. gesenkt werden kann. In Figur 6 ist das Justierteil 7 in der tiefsten Position dargestellt. Selbstverständlich ware es auch denkbar, die Schlitze 9, 9' nicht im rechten Winkel, sondern schräg zur Stützplatte 14 anzuordnen.

Wird nun eine Verschwenkung der Schiene 1 relativ zur Unterlage 2 gewünscht, so ist die Schraube 11' aus der Mutter 5' bzw. aus dem Schlitz 9' zu entfernen und durch den bogenförmigen Schlitz 6 von der Rückseite des Fussteils 3 her in die Mutter 10 des Justierteils einzudrehen. Diese Anordnung ist in Figur 7 dargestellt, wobei von der Schraube 11' nur noch der aus der Mutter 10 ragende Schraubenbolzen zu sehen ist. Das Justierteil 7 kann auf diese Weise um das Zentrum der Schraube 11 in Pfeilrichtung W unter einem Winkel von maximal 45° verschwenkt werden. So ist es auf einfachste Weise möglich, mit einer auf der Schiene 1 vorgeschobenen Betonsäge einen schrägen Schnitt in die Unterlage 2 zu schneiden. Selbstverständlich könnte der bogenförmige Schlitz sich auch über mehr oder weniger als 45° erstrecken. Für eine Schrägneigung auf die andere Seite muss nur die Vorrichtung um 180° umgesetzt werden. Dies kann ersichtlicherweise durch einfaches Lösen der Schraube 17 erfolgen.

In Figur 5 ist die Möglichkeit angedeutet, die Platte 4 des Fussteils 3 über ein Scharnier 24 mit der Fussplatte 12 zu verbinden. Das Scharnier könnte auf geeignete Weise feststellbar sein, so dass die Schiene 1 noch um eine zweite Achse relativ zur Unterlage 2 verschwenkt werden könnte. So könnte beispielsweise das Fussteil 3 auf Treppenstufen befestigt werden, wie aus Figur 8 ersichtlich ist. Dabei muss das Justierteil 7 derart abgewinkelt werden, dass die Schiene 1 parallel zur Schräglage der Treppe verläuft.

## Patentansprüche

1. Vorrichtung zum justierbaren Befestigen von Schienen (1) auf einer Unterlage (2), wobei ein mit der Unterlage (2) fest verbindbares Fussteil (3) mit einer Platte (4), an der im Abstand (A) wenigstens zwei Aufnahmeöffnungen (Muttern 5) zum Fixieren von Befestigungselementen (11) angeordnet sind, und die einen bogenförmigen Schlitz (6) aufweist, sowie durch ein mit einem Schienenabschnitt fest verbindbares Justierteil (7) mit einer Platte (8), die zwei parallele Schlitze (9, 9') mit dem gleichen Abstand (A) wie die Aufnahmeöffnungen am Fussteil, sowie wenigstens eine dazwischen liegende Aufnahmeöffnung (Mutter 10) zum Fixieren eines Befestigungselementes (11) aufweist, wobei das Justierteil (7) mittels der Befestigungselemente (11) am Fussteil (3) feststellbar ist und die Befestigungselemente (11) wahlweise durch die parallelen Schlitze (9, 9') oder durch einen parallelen Schlitz (9) und den bogenförmigen Schlitz (6) in die Aufnahmeöffnungen (Muttern 5 bzw. 10) eingreifen.

2. Vorrichtung nach Anspruch 1, dadurch gekennzeichnet, dass die Aufnahmeöffnungen durch an den Platten (4 bzw. 8) befestigte Schraubenmuttern (5 bzw. 10) gebildet werden.

3. Vorrichtung nach Anspruch 1 oder 2, dadurch gekennzeichnet, dass das Fussteil (3) winkelförmig ausgebildet ist und eine Fussplatte (12) mit einer Oeffnung (13) aufweist.

4. Vorrichtung nach Anspruch 1 oder 2, dadurch gekennzeichnet, dass das Fussteil als feststellbares Scharnier ausgebildet ist, so dass der Winkel zwischen Platte (4) und Untergrund (2) verstellbar ist.

5. Vorrichtung nach einem der Ansprüche 1 bis 4, dadurch gekennzeichnet, dass das Justierteil (7) winkelförmig ausgebildet ist und eine Stützplatte (14) mit wenigstens einem in die Schiene (1) eingreifenden Führungselement (15) aufweist.

6. Vorrichtung nach einem der Ansprüche 1 bis 5, dadurch gekennzeichnet, dass der bogenförmige Schlitz (6) im Fussteil ein Kreisbogen ist, der sich über 45° erstreckt.

## Revendications

1. Dispositif pour fixer de façon réglable des rails (1) sur un support (2), dans lequel il est prévu un élément formant socle (3), apte à être relié de façon fixe au support (2) et comportant une plaque (4) dans laquelle sont ménagés, suivant un écartement (A), au moins deux orifices de réception (écrous 5) pour fixer des éléments de fixation (11), et qui possède une fente courbe (6), et dans lequel il est également prévu un élément de réglage (7), apte à être relié de façon fixe à une section de rail, et comportant une plaque (8) pourvue de deux fentes parallèles (9, 9') séparés par le même écartement (A) que les orifices de réeption de l'élément formant socle, et au moins un orifice de réception (écrou 10) placé entre lesdites fentes, en vue de fixer un élément de fixation (11), l'élément de réglage (7) pouvant être fixé à l'élément formant socle (3) à l'aide des éléments de fixation (11) et ces derniers étant en prise, sélectivement, à travers les fentes parallèles (9, 9') ou une fente parallèle (9) et la fente courbe (6), dans les orifices de réception (écrous 5 et 10, respectivement).

2. Dispositif selon la revendication 1, caractérisé en ce que les orifices de réception sont formés par des écrous (respectivement 5 et 10) fixés sur les plaques (respectivement 4 et 8).

3. Dispositif selon la revendication 1 ou 2, caractérisé en ce que l'élément formant socle (3) a une configuration angulaire et possède une plaque de socle (12) pourvue d'un orifice (13).

4. Dispositif selon la revendication 1 ou 2, caractérisé en ce que l'élément formant socle est conçu comme une charnière apte à être bloquée, de telle sorte que l'angle entre la plaque (4) et la surface inférieure (2) est réglable.

5. Dispositif selon l'une des revendications 1 à 4, caractérisé en ce que l'élément de réglage (7) a une configuration angulaire et possède une plaque d'appui (14) comportant au moins un élément de guidage (15) venant en prise dans le rail (1).

6. Dispositif selon l'une des revendications 1 à 5, caractérisé en ce que la fente courbe (6) ménagée dans l'élément formant socle définit un arc de cercle qui s'étend sur 45°.

## Claims

1. Device for the adjustable fixing of rails (1) onto a base (2), characterised by a foot component (3), firmly fixable to the base (2), with a plate (4) on which at least two attachment openings (nuts 5) with a spacing (A) for attachment of fixing elements (11) are arranged and which exhibits a bow shaped slot (6), as well as by an adjustment component (7), firmly connectable to a rail cross section, with a plate (8) which exhibits two parallel slots (9, 9') with the same spacing (A) as the attachment openings on the foot component as well as at least one attachment opening (nut 10) positioned between for fixing of a fixing element (11), whereby the adjustment component (7) is able to be locked on the foot component (3) by means of the fixing elements (11) and the fixing elements (11) selectively engage into the attachment openings (nuts 5 respectively 10) through the parallel slots (9, 9') or through one parallel slot (9) and the bow shaped slot (6).

2. Device according to claim 1, characterized in that the attachment openings are formed by threaded nuts (5, respectively 10) fastened to the plates (4, respectively 8).

3. Device according to claims 1 or 2, characterized in that the foot component (3) is formed as an angle and exhibits a foot plate (12) with an opening (13).

4. Device according to claims 1 or 2, characterized in that the foot component is formed as a lockable hinge so that the angle between the plate (4) and the base (2) is able to be adjusted.

5. Device according to one of the claims 1 to 4, characterized in that the adjustment component (7) is formed as an angle and exhibits a support plate (14) with at least one guide element (15) which engages in the rail (1).

6. Device according to one of the claims 1 to 5, characterized in that the bow shaped slot (6) in the foot component is a circular bow which extends through an angle of more than 45.

# Fig. 1

# Fig. 2

# Fig. 3

# Fig. 4

V

17

23

7

11

10

16

4

2

24

H

**Fig. 5**

1

20

17

1

11

11'

H

9

9'

16

2

**Fig. 6**

**Fig. 7**

**Fig. 8**